# EUROPEAN PATENT APPLICATION

(11) **EP 2 065 832 A1**
(43) Date of publication of application: **03.06.2009**
(21) Application number: 08016130.0
(22) Date of filing: 12.09.2008
(51) Int. Cl.: G06K 7/00

(54) **Radio communication device**

(30) Priority: 29.11.2007 JP 2007309119
(71) Applicant: Toshiba TEC Kabushiki Kaisha, Tokyo 141-8664 (JP)
(72) Inventor: Suzuki, Shigeaki, Shinagawa-ku, Tokyo 141-8664 (JP)
(74) Representative: Kramer - Barske - Schmidtchen

(57) **Abstract**

A radio communication device transmits interrogation radio wave to unspecified radio tags (ST5). When specifying a radio tag which returns a response radio wave for the interrogation radio wave (ST7), the device transmits a processing radio wave to the specified radio tag (ST9). In this case, transmission power of the processing radio wave is always set larger than transmission power of the interrogation radio wave.

## Description

The present invention relates to a radio communication device which performs radio communication with radio tags configured to write and read data by using radio waves.

A radio communication device is configured to include an antenna and perform radio communication with radio tags existing within a communication range of the antenna by use of radio waves. This kind of radio communication device may read data from a memory on the radio tag and write the data to the memory.

A specific ID is stored as tag identification information in the memory of each radio tag. The radio communication device may individually specify the radio tags by reading the IDs of radio tags. Such a radio tag is referred to, for example, as a radio-frequency identification (RFID) tag. The radio communication device is referred to as a radio tag reader/writer or an RFID reader/writer.

In the case in which the data is written to the radio tag by using this kind of radio communication device, the radio communication device firstly transmits an interrogation radio wave without specifying the radio tag. The radio tags which have received the interrogation radio wave then return response radio waves. The response radio waves have been modulated by the IDs stored in the memories of the radio tags. The response radio waves from the radio tags are received by the radio communication device. The radio communication device demodulates the received response radio waves to recognize the IDs of the radio tags. When recognizing the IDs, the radio communication device performs radio communication one by one with the radio tags having those recognized IDs to read and write the data in a noncontact manner.

For instance, Jpn. Pat. Appln. KOKAI Publication 2001-339327 discloses a technique which transmits the interrogation radio wave with minimum transmission power and which transmits a data write command with the minimum transmission power if the response from the radio tag has been received. Only in the case where a write error occurs, does the technique of the KOKAI Publication enhance transmission power of the data write command and re-transmit the data write command has been disclosed in.

However, the radio tag needs much power in writing the data as compared to reading the data. After specifying the radio tag by the transmission of the interrogation radio wave with the minimum transmission power, the radio communication device disclosed in the foregoing patent document also transmits the data write command with the minimum transmission power once. Thus, there is every possibility that a write error is produced due to a shortage of power. There is some possibility that the data writing is carried out without producing a write error although the shortage of the power and results in writing incorrect data to the radio tag.

The present invention is made on the basis of the foregoing situation, and an object of the invention is to provide a radio communication device configured to enhance processing efficiency after specifying a radio tag and enhance certainty of the processing.

According to an aspect of the invention, there is provided a radio communication device which performs radio communication with radio tags configured to write and read data by using radio waves, comprising: a tag interrogation unit configured to transmit an interrogation radio wave to unspecified radio tags; a tag specifying unit configured to specify the radio tags which have returned response radio waves for the interrogation radio wave transmitted from the tag interrogation unit; and a tag processing unit configured to transmit a processing radio wave to the radio tag specified by the tag specifying unit, wherein, the transmission power of the processing radio wave is set to a value which is always larger than transmission power of the interrogation radio waves.

The invention can be more fully understood from the following detailed description when taken in conjunction with the accompanying drawings, in which:
FIG. 1 is a schematic view depicting principal configuration of radio tag label paper to be used in an embodiment of the invention;
FIG. 2 is a cross-sectional view taken on arrowed line A-A in FIG. 1;
FIG. 3 is a block diagram depicting a principal configuration of a radio tag label issuing device;
FIG. 4 is a block diagram depicting a principal configuration of a reader/writer provided for the radio tag label issuing device;
FIG. 5 is a view depicting a principal memory area to be formed in a storage unit of the radio tag reader/writer;
FIG. 6 is a flowchart depicting a principal part of processing procedure to be executed by a control unit of the radio tag reader/writer; and
FIG. 7 is a view depicting an example of data to be set in a radio wave power setting table.

Hereinafter, an optimum embodiment in order to implement the invention will be described with reference to the drawings.

The optimum embodiment shows the case that the invention is applied to a radio tag reader/writer of a radio tag label issuing device. The issuing device issues radio tag labels to be stuck to various articles as article management labels.

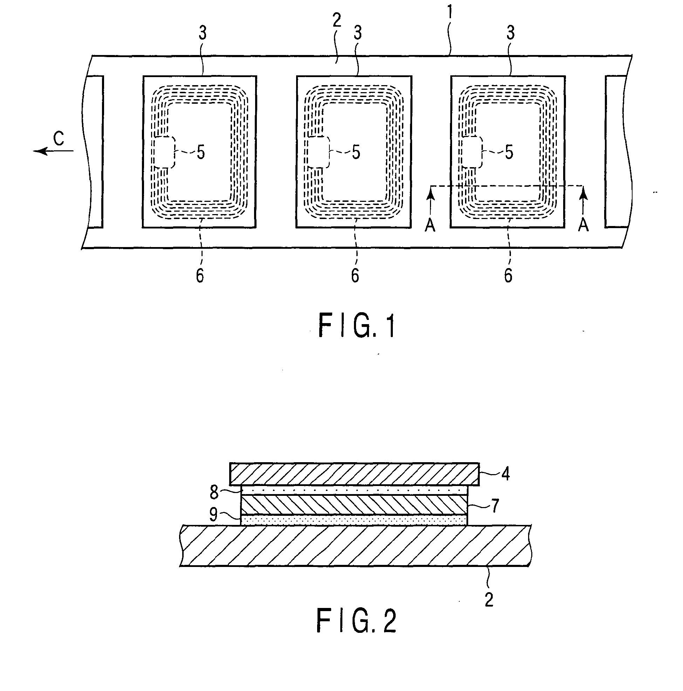

At first, a radio tag label sheet 1 to be used in the embodiment will be described by referring to FIGS. 1-2. The label sheet 1, as shown in FIG. 1, is composed of a band-like mounting sheet 2 and a large number of radio tag labels 3. Each tag label 3 is stuck to the surface of the mounting sheet 2 so as to be linearly arranged in a sheet conveying direction C in a manner so that the tag labels 3 are freely stuck and peeled off.

A cross-sectional view taken on arrowed line A-A of FIG. 1 is expanded to be shown in FIG. 2. Each radio tag label 3, as shown in FIG. 2, is structured in which a radio tag 7 is each stuck to a mounting sheet 2 through an adhesive 9 and the radio tag 7 is covered with a label sheet 4 through an adhesive 8. The adhesive 8 has fully stronger adhesive force than that of the adhesive 9. Thereby, the label sheet 4 and the radio tag 7 are peeled off from the mounting sheet 2 as one. The surface of the label sheet 4 becomes a print face for information.

The radio tag 7 has built-in IC chip 5 and antenna 6 in a thin film. This kind of radio tag 7 is referred to as an RFID inlet generally.

The IC chip of the radio tag 7 includes a power source generation unit, a demodulation unit, a modulation unit, a memory unit and a control unit which controls these units. The power source generation unit rectifies and stabilizes the radio wave received by the antenna to supply the generated power source to each unit of the IC chip 5. The demodulation unit demodulates the radio wave received by the antenna 6 to send the radio wave to the control unit. The modulation unit modulates the data sent from the control unit onto a radio wave to be emitted from the antenna 6.

The control unit writes the data demodulated by the demodulation unit in the memory unit. The control unit reads the data from the memory unit to transmit the data to the modulation unit. The memory unit is composed of a setting area which stores and holds the data in a non-rewritable manner and a user area which may write arbitrary data. An ID, which is specific tag identification information, is written in advance in the setting area.

The following will describe a radio tag label issuing device 10 which uses the radio tag label sheet 1.

The issuing device 10 includes a label holder (not shown). The label sheet 1 is set in the label holder in a state that the label sheet 1 is winded in a roll shape. The tip of the label sheet 1 which is let out from the label holder is introduced to a peel off roller 11 along with a prescribed conveying path. The mounting sheet 2 is solely winded by the peel off roller 11 to peel off the tag label 3. The tag label 3 which is peeled off by the roller 11 is discharged from a label issuing port (not shown). The mounting sheet 2 winding around the roller 11 is reeled off with a reel off roller (not shown).

A label sensor 12, an antenna 14 of a radio tag reader/writer 13 and a print head 15 are arranged in turn from an upstream side in a conveying direction B of the label sheet 1, namely from the side of the label holder toward a downstream side, namely the side of the roller 11 on a conveying path from the label holder up to the roller 11.

The label sensor 12 detects the tag label 3 of the label sheet 1 which has been let out from the label holder. For instance, the label sensor 12 detects the tag label 3 by optically detecting a rear end edge of the tag label 3.

The antenna 14 emits a radio wave in accordance with the control by the reader/writer 13. The antenna 14 receives the radio wave emitted from the radio tag 7 of the tag label 3. The reader/writer 13 may read the memory data in a non-contact manner from the radio tag 7 of the tag label 3 existing within a radio wave reachable range in which the radio wave to be emitted from the antenna 14 can be reached. The reader/writer 13 may write the data to the memory unit in a non-contact manner.

The print head 15 is driven by a head drive unit 16. The driven print head 15 prints a variety of items of information on a print face of the label sheet 4 that is the surface of the tag label 3. As regards this kind of print head 15, for example, a thermal head can be used.

The issuing device 10 further includes an operation panel 17, a communication interface 18, a conveying system drive unit 19, a storage unit 20, a main body control unit 21, or the like. The operation panel 17 is provided with various keys, display unit, etc. Host equipment such as a personal computer is connected to the interface 18.

The drive unit 19 controls a conveying mechanism of the label sheet 1 and a drive mechanism of the reel off roller. The conveying mechanism conveys the label sheet 1 set in the label holder in one direction of a length direction and in its opposite direction.

The storage unit 20 stores label write data and label print data which have been input through the interface 18. The main body control unit 21 controls the conveying system drive unit 19, the radio tag reader/writer 13, and the head drive unit 16. The control writes the label write data to the radio tag 7 and also issues the tag label 3 in which the label print data is printed on the print face.

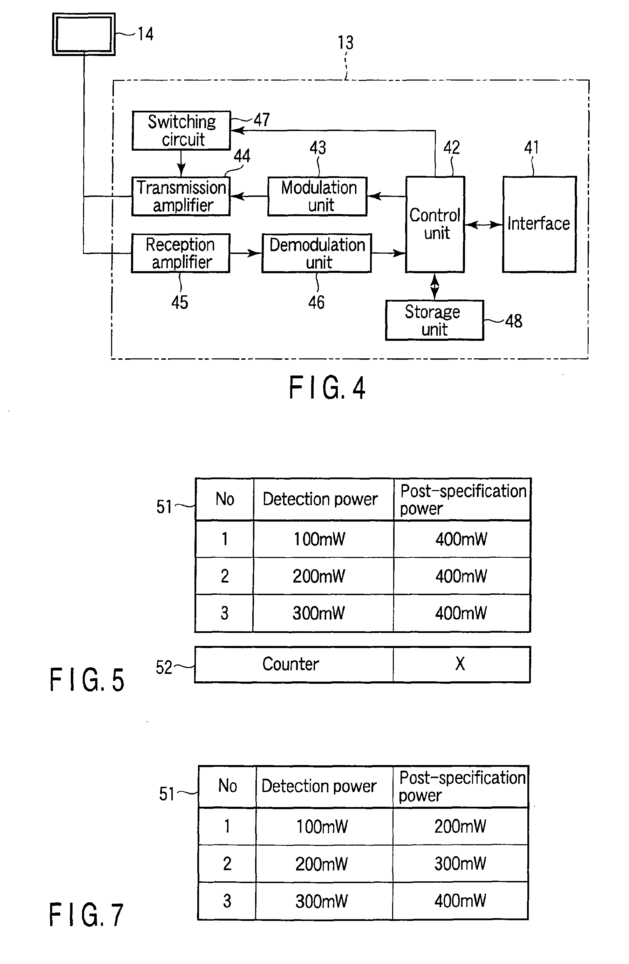

FIG. 4 shows a block diagram illustrating a principal configuration of the radio tag reader/writer 13. The reader/writer 13 includes an interface unit 41, a control unit 42, a modulation unit 43, a transmission amplifier 44, a reception amplifier 45, a demodulation unit 46, a switching circuit 47 and a storage unit 48.

The interface unit 41 controls data communication between the main body control unit 21 and the control unit 42. The control unit 42 controls operations of the reader/writer 13. The modulation unit 43 modulates a carrier wave with transmission data supplied from the control unit 42 to generate a modulated signal. The transmission amplifier 44 amplifies the modulated signal which has been sent from the modulation unit 43 to output the modulated signal to the antenna 14.

The reception amplifier 45 amplifies the modulated signal corresponding to the radio wave received by the antenna 14 to output the modulated signal to the demodulation unit 46. The demodulation unit 46 demodulates the modulated signal amplified by the reception amplifier 45 to obtain reception data. The reception data is output to the control unit 42.

The switching circuit 47 adjusts the gain of the transmission amplifier 44 to vary transmission power of the radio wave emitted from the antenna 14. The switching circuit 47 includes a digital-analog conversion function in order to convert a digital signal from the control unit 42 into an analog signal. The analog signal indicates a current value. The transmission amplifier 44 includes a power amplifier. The power amplifier switches its transmission power according to the analog signal from the switching circuit 47.

In the storage 48, a radio wave output setting table 51 and a counter 52 are formed as shown in FIG. 5. The setting table 51 stores power data for deciding a radio wave output from the antenna 14 in response to a series of numbers. The power data includes power data of detection power and power data of post-specification power. The detection power is the transmission power of an interrogation radio wave to be emitted so that the reader/writer 13 specifies a radio tag. The post-specification power is a processing radio wave to be emitted from the reader/writer 13 in order to write the data to the specified radio tag.

In this embodiment, power data of detection power 100 mW and power data of post-specification power of 400 mW are preset corresponding to the number "1", power data of detection power 200 mW and power data of post-specification power of 400 mW are preset corresponding to the number "2", and power data of detection power 300 mW and power data of post-specification power of 400 mW are preset corresponding to the number "3". That is, the detection power is set so as to increase the power step by step in ascending order of numbers. For the post-specification power, values which is larger than a maximum value of the detection power are fixedly set.

The data at the setting table 51 and the counter 52 are cleared when the power source of the radio tag label issuing device 10 is shut down. After this, at the time of start-up of the issuing device 10 when the power source is supplied, desired power data is set from the host equipment to the setting table 51 through the main body control unit 21 connected to the interface 18. A counter 32 is reset to zero.

For instance, when an issuing job of the radio tag label 3 is given from the host equipment, the control unit 21 stores label write data and label print data included in the issuing job in the storage unit 20. The control unit 21 gives a command to start up the conveying system drive unit 19. Thereby, since conveying the label sheet 1 is started, the control unit 21 stands by for detection of the tag label 3 by the label sensor 12. After the tag label 3 is detected, the control unit 21 gives a command to write the label write data.

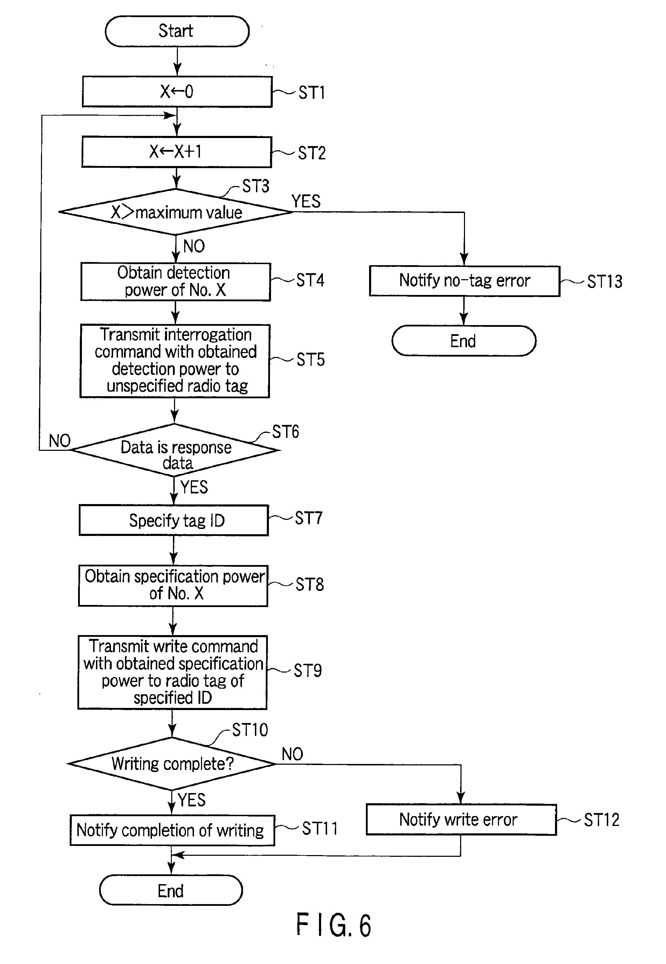

The control unit 42 of the reader/writer 13 which has given the command stores the label write data in the storage unit 48. After the storage unit 48 completes storing the label write data, the control unit 42 starts processing of a procedure to be concretely illustrated in the flowchart of FIG. 6.

The control unit 42 firstly resets the counter 52 to zero in Step ST1. Then, the control unit 42 increments the counter 52 by "1" in Step ST2.

When incrementing the counter 52, the control unit 42 determines whether the count of the counter 52 has exceeded a maximum value to be set to the radio wave output setting table 51 in Step ST3. If the count has not exceeded the maximum value, the control unit 42 retrieves the setting table 51 so as to obtain the power data of the detection power corresponding to the number "X" (X is the count of the counter 52) in Step ST4. When obtaining the power data of the detection power, the control unit 42 outputs the power data to the switching circuit 47 in Step ST5. The control unit 42 outputs the interrogation command of the radio tag to the modulation unit 43.

Thereby, the modulation unit 43 modulates the carrier wave with the interrogation command to generate the modulated signal. The modulated signal is amplified by the transmission amplifier 44 to be emitted from the antenna 14 as the interrogation radio wave. At this time, the transmission power of the interrogation radio wave becomes a value of the detection power corresponding to the number "X" in accordance with the control by the switching circuit 47.

The interrogation wave may be received at an unspecified number of radio tags. Each radio tag 7 which has received these interrogation radio wave returns a response radio wave. The response radio waves are received by the antenna 14. The reception signals by the antenna 14 are amplified by the reception amplifier 45 to be transmitted to the demodulation unit 46. The demodulation unit 46 demodulates the reception signals. The demodulated data is transmitted to the control unit 42.

After transmitting the interrogation command, the control unit 42 determines the presence or absence of responses from the radio tags 7 in Step ST6. After acquiring the data demodulated by the demodulator 46, the control unit 42 determines whether or not the data is the response data of the ID. If the data is the response data of the ID (YES, Step ST6), the control unit 42 specifies the ID of the radio tag 7 to be processed in Step ST7.

When the ID of the radio tag 7 has been specified, the control unit 42 retrieves again the setting table 51 in order to obtain the power data of the post-specification power corresponding to the number "x" ("x" is the count of the counter 52). When obtaining the power data of the post-specification power, the control unit 42 outputs the obtained power data to the switching circuit 47 in Step ST9. The control unit 42 reads the label write data from the storage unit 48 to output the write command of the write data to the modulation unit 43.

Thereby, the modulation unit 43 modulates the carrier wave by the write command to generate the modulated signal. The modulated signal is amplified by the transmission amplifier 44 and emitted from the antenna 14 as a write processing radio wave. At this moment, the transmission power for the write processing radio wave becomes the value of the post-specification power corresponding to the number "x" through the control by means of the switching circuit 47.

The radio tag 7 having the specified ID may solely receive the write processing radio wave. The radio tag 7 which has received the write processing radio wave writes the tag write data to the memory. After completing the writing normally, the radio tag 7 transmits a radio wave of a normal completion response. The response radio wave is received by the antenna 14. The reception signal at the antenna 14 is amplified by the reception amplifier 45 to be transmitted to the demodulation unit 46. The demodulation unit 46 demodulates the reception signal. The demodulated data is transmitted to the control unit 42.

After transmitting the write command, the control unit 42 stands by for the normal completion response from the radio tag 7 in Step ST10. When acquiring the data demodulated by the demodulation unit 46, the control unit 42 determines whether or not the acquired data is the response data of the normal completion. If the data is the response data of the normal completion (YES, Step ST10), the control unit 42 notifies the writing completion to the main body control unit 21 in Step ST11.

When the response data of normal completion has not been received from the radio tag 7 within a prescribed time (NO, Step ST10), the control unit 42 notifies a write error 4 to the main body control unit 21 in Step ST12.

If no response has returned from the radio tag 7 for the required command within a prescribed time (NO, Step ST6), the control unit 42 advances to processing in Step ST2. That is, the control unit 42 further increments the counter X by "1". When obtaining the power data of the detection power corresponding to the number "x" from the setting table 51, the control unit 42 outputs the power data to the switching circuit 47. The control unit 42 outputs the interrogation command of the radio tag 7 to the modulation unit 43.

The control unit 42 increments the counter X step by step to repeat the processing in Steps ST3-ST5 until the response from the radio tag 7 is detected. If the count of the counter 52 exceeds the maximum value of the number set to the setting table 51 without detecting the response from the radio tag 7 (YES, Step ST3), the control unit 42 notifies a no-tag error to the main body control unit 21 in Step ST13.

When receiving the notification of the writing completion from the reader/writer 13, the control unit 21 gives label print data stored in the storage unit 20 to the head drive unit 16 in synchronization that the tag label 3 has been conveyed to the print position of the print head 15. Then, the print head 15 is operated, and the label print data is printed on the print face of the tag label 3. After this, the tag label 3 with the label write data written thereon and with the label print data printed thereon is conveyed to the peel off roller 11. The tag label 3 is peeled off from the mounting sheet 2 by means of the peel off roller 11 to be issued.

In this way, when a write command is issued from the control unit 21, the radio tag reader/writer 13 firstly reads the detection power stored in the number "1" from the setting table 51. The antenna 14 emits the interrogation radio wave with the detection power as the transmission power. That is, the interrogation radio wave is emitted with a transmission power of 100 mW.

The radio tag 7 returns the response radio wave for the interrogation radio wave, and when the response radio wave is received by the antenna 14; the reader/writer 13 specifies the radio tag 7 which has returned the response radio wave in accordance with the ID included in the response radio wave.

If the radio tag 7 has been specified, the reader/writer 13 reads the post-specification power stored at the number "1" from the table 51. The antenna 14 then emits the write processing radio wave with the post-specification power as the transmission power. That is, the antenna 14 emits the write processing radio wave with a transmission power of 400 mW. Thereby, the tag write data is written to the memory of the specified radio tag 7.

Conversely, if the response radio wave from the radio tag 7 has not been received by the antenna 14, the reader/writer 13 reads the detection power stored at the number "2" from the setting table 51. The interrogation radio wave is emitted with the detection power as the transmission power. That is, the interrogation radio wave is emitted with a transmission power of 200 mW.

When the radio tag 7 responds for this interrogation radio wave to specify the ID of the radio tag 7, the reader/writer 13 reads the post-specification power stored in the number "2" from the setting table 51. The write processing radio wave is emitted with the post-specification power as the transmission power. That is, the write processing radio wave is emitted with a transmission power of 400 mW. Thereby, the write data is written to the memory of the specified radio tag 7.

Still the radio tag 7 has not been specified, the reader/writer 13 then reads the detection power stored in the number "3" from the setting table 51. The interrogation radio wave is emitted with the detection power as the transmission power. That is, the interrogation radio wave is emitted with a transmission power of 300 mW.

The radio tag 7 responds for this interrogation radio wave, and if the ID of the radio tag 7 has been specified, the reader/writher 13 reads the post-specification power stored at the number "3" from the setting table 51. The write processing radio wave is emitted with the post-specification power as the transmission power. That is, the write processing radio wave is emitted with a transmission power of 400 mW. Thereby, the tag write data is written to the memory of the specified radio tag 7.

Even when the interrogation radio wave has been emitted with the detection power stored at the number "3" as the transmission power, if the response radio wave has not been received, the reader/writer 13 notifies the no-tag error to the main body control unit 21.

In this way, until the response radio wave from the radio tag 7 is received, the reader/writer 13 switches the transmission power for the interrogation radio wave in accordance with the power data of the detection power set in ascending order of numbers in the setting table 51. If the radio tag 7 responds to the interrogation radio wave which has been transmitted with any transmission power and the ID of the radio tag 7 is specified, the reader/writer 13 transmits the write processing radio wave with the post-specification power which has been set in the setting table in response to the number at that time.

As mentioned above, the detection power is set so as to increase step by step in ascending order of the numbers in the radio wave output setting table 51. Meanwhile, a fixed value larger than the maximum value of the detection power is set for the post-specification power. Thereby, the transmission power of the write processing radio wave for writing the data to the radio tag 7 specified by the interrogation radio wave may be always set larger than the interrogation radio wave for specifying the radio tag.

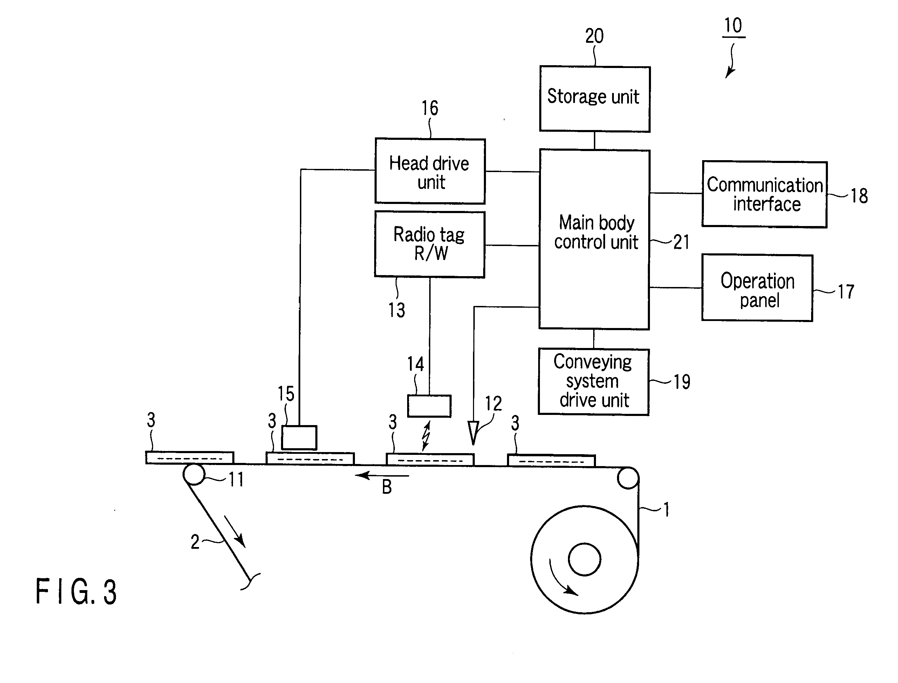

If the transmission power of the radio wave emitted from the antenna 14 is smaller, the arrival distance of the radio wave becomes short. Therefore, in FIG. 3, although the radio tag 7 of the radio tag label 3 located directly below the antenna 14 may receive the interrogation radio wave; the radio tags 7 of the tag labels 3 located back and forth of the antenna 14 may not receive the interrogation radio wave. As a result, the reader/writer 13 may surely specify the radio tag 7 of the radio tag label 3 located directly below the antenna 14 as the write target. In other words, the reader/writer 13 does not specify the radio tag 7 mounted on the tag label 3 other than the radio tag 7 of the tag label 3 located directly below the antenna 14.

Meanwhile, after the radio tag 7 to be written has been specified, the reader/writer 13 transmits the write processing radio wave. Solely the radio tag 7 specified as the write target may receive the write processing radio wave. The radio tag 7 which has received the write processing radio wave writes the write data to the memory of the radio tag 7.

The transmission power of the write processing radio wave is set to a value fully larger than the transmission power of the interrogation radio wave, and set to a level capable of writing the data to the radio tag 7 stably. Thus, the reader/writer 13 can accurately write the tag write data to the radio tag 7 of the radio tag label 3 located immediately beneath the antenna 14.

According to the embodiment, since a write error due to a shortage of power is not produced in writing the write data to the specified radio tag, the processing efficiency after specifying the radio tag may be enhanced. The tag write data may be surely written to the specified radio tag.

The invention is not limited to the specific details and representative embodiments shown and described herein, and in an implementation phase, this invention may be embodied in various forms without departing from the spirit or scope of the general inventive concept thereof by deforming constituent elements.

For instance, while the embodiments have been described that the post-specification power to be set in the radio wave output setting table 51 is set to the fixed value larger than the maximum value of the detection power; the post-specification power may be set, as shown in FIG. 7, to a value larger than the corresponding-detection power so as to increase the post-specification power step by step. Normally, in the case that the interrogation radio wave is transmitted with the transmission power of 100 mW to enable detection of the radio tag, it may be assumed that the radio tag is located relatively near to the antenna 14. In this case, the tag write data can be surely written without having to increase the transmission power to the level greater than the maximum value of the detection power. Decreasing the transmission power below the maximum value of the detection power enables the transmission power to be saved.

The values of the transmission power to be set in the radio wave output setting table 51 are not limited to the values of the embodiments. Although the detection power has been set step by step, the detection power need not always be set step by step. A point is that the transmission power of the processing radio wave always becomes larger than the transmission power of the interrogation radio wave.

The invention is not limited to the radio tag reader/writer 13 of the radio tag label issuing device 10. Applying the invention to a reader/writer, for example, in a system in which data necessary for radio tags attached to the articles to be conveyed with a conveyer enables improving the processing efficiency and the certainty of the processing after specifying a radio tag.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A radio communication device (13) which performs radio communication with radio tags configured to write and read data by using radio waves, **characterized by** comprising:
a tag interrogation unit (ST5) configured to transmit an interrogation radio wave to unspecified radio tags;
a tag specifying unit (ST7) configured to specify the radio tags which have returned response radio waves for the interrogation radio wave transmitted from the tag interrogation unit; and
a tag processing unit (ST9) configured to transmit a processing radio wave to the radio tag specified by the tag specifying unit, wherein,
the transmission power of the processing radio wave is set to a value which is always larger than transmission power of the interrogation radio waves.

2. The radio communication device according to claim 1, **characterized by** further comprising:
a power switching unit (ST2-ST4) configured to increase step by step the transmission power of the interrogation radio wave from the tag interrogation unit until the response radio waves are received, wherein
the tag interrogation unit restricts an upper limit value of the transmission power of the interrogation radio wave to a value which is smaller than the transmission power of the processing radio wave.

3. The radio communication device according to claim 2, **characterized by** further comprising:
a power setting unit (51) configured to respectively set values larger than the transmission power as the transmission power of each response radio wave increasing step by step by means of the power switching unit, wherein
the tag processing unit transmits the processing radio wave with transmission power equivalent to a value set by the power setting unit as the transmission power of the interrogation radio wave when the radio tag is specified by the tag specifying unit.

4. The radio communication device according to claim 1, **characterized in that**
the processing radio wave transmitted from the tag processing unit is radio wave of a data write command for the radio tag.

5. The radio communication device according to claim 1, **characterized by** further comprising:
a radio wave output table (51) configured to store each setting value of the transmission power of the interrogation radio wave and the transmission power of the processing radio wave; and
a control unit (42) configured to transmit the interrogation radio wave with the transmission power of the interrogation radio wave which has been set in the radio wave output setting table in transmitting the interrogation radio wave from the tag interrogation unit, and transmit the processing radio wave with the transmission power of the processing radio wave which has been set in the radio wave output setting table in transmitting the processing radio waves from the tag processing unit, wherein
the radio wave output setting table stores a transmission power setting value of the processing radio wave as a transmission power setting value which is larger than a transmission power setting value of the interrogation radio wave.

6. The radio communication device according to claim 5, **characterized in that**
the radio wave output setting table stores a plurality of values increasing step by step as the transmission power of the interrogation radio wave, and a value which is larger than a maximum value of the transmission power of the interrogation radio wave as the transmission power of the processing radio wave.

7. The radio communication device according to claim 5, **characterized in that**
the radio wave output setting table stores a plurality of values increasing step by step as the transmission power of the interrogation radio wave and further, stores a value which is larger than the set value, respectively, for the set values of the transmission power as the transmission power of the processing radio wave for a transmission power setting value of each interrogation radio wave.

8. A radio communication device (13) which performs radio communication with radio tags configured to write and read data by using radio waves, **characterized by** comprising:
tag interrogation means (ST5) for transmitting interrogation radio wave to unspecified radio tags;
tag specifying unit (ST7) for specifying the radio tag which has returned a response radio wave for the interrogation radio wave transmitted from the tag interrogation means; and
tag processing means (ST9) for transmitting a processing radio wave to the radio tag specified by the tag specifying unit, wherein
the transmission power of the processing radio wave being larger than the transmission power of the interrogation radio wave at all times.

9. The radio communication device according to claim 8, **characterized by** further comprising:
power switching means (ST2-ST4) for increasing, step by step, the transmission power of the interrogation radio wave from the tag interrogation means until the response radio wave is received, wherein
the power switching means restricts an upper limit value of the transmission power of the interrogation radio wave to a value which is smaller than the transmission power of the processing radio wave.

10. The radio communication device according to claim 9, **characterized by** further comprising:
setting means (51) for setting a value, which is larger than each transmission power for the transmission power of each response radio wave increasing step by step by the power switching means, to the transmission power, wherein
the tag processing means transmits the processing radio wave by transmission power equivalent to values set to the setting means for the transmission power of the interrogation radio wave when the radio tag is specified by the tag specifying means.
